# EUROPÄISCHE PATENTSCHRIFT

(11) **EP 0 724 515 B1**
(45) Veröffentlichungstag und Bekanntmachung des Hinweises auf die Patenterteilung: **03.06.1998**
(21) Anmeldenummer: 91906806.4
(22) Anmeldetag: 27.03.1991
(51) Int. Cl.: B29C 45/14, B29C 33/18

(54) **VERFAHREN ZUM HERSTELLEN EINES KUNSTSTOFFBECHERS DURCH SPRITZGIESSEN UND ZUGEHÖRIGES FORMWERKZEUG**
PROCESS FOR PRODUCING A PLASTIC CONTAINER BY INJECTION MOULDING AND SUITABLE MOULDING TOOL
PROCEDE ET OUTIL DE MOULAGE UTILES POUR PRODUIRE DES RECIPIENTS EN PLASTIQUE PAR MOULAGE PAR INJECTION

(43) Veröffentlichungstag der Anmeldung: 07.08.1996
(73) Patentinhaber: SYSTEC ENGINEERING KNAUER GMBH & CO. KG, D-72574 Bad Urach (DE)
(72) Erfinder: DÖBLER, Walter, 72574 Bad Urach (DE)
(74) Vertreter: Aufenanger, Martin
(86) Internationale Anmeldenummer: EP9100592
(87) Internationale Veröffentlichungsnummer: WO9217326

(56) Entgegenhaltungen:
- EP-A- 0 296 302
- CH-A- 461 787
- DE-B- 1 194 564
- DE-B- 1 285 169
- FR-A- 2 218 176
- FR-A- 2 606 701
- GB-A- 2 185 709
- PATENT ABSTRACTS OF JAPAN vol. 9, no. 111 (M-379)(1834) 15. Mai 1985 & JP,A,59 232 837 ( AKINOBU TATEBAYASHI ) 27. Dezember 1984 siehe Zusammenfassung
- PATENT ABSTRACTS OF JAPAN vol. 7, no. 177 (M-233)(1322) 5. August 1983 & JP,A, 58 081 143 ( TOYOTA JIDOSHA KOGYO ) 16. Mai 1983 siehe Zusammenfassung

## Beschreibung

Die Erfindung bezieht sich auf ein Spritzgußformwerkzeug gemäß Oberbegriff von Anspruch 1.

Ein solches Werkzeug ist aus der GB-A-21 85 709 bekannt. Dieses weist eine zweigeteilte Matrize, als Dichtung verwendete O-Ringe und Federn, die die Funktion haben die Matrizenhälften gleichzeitig mit dem Öffnen voneinander zu trennen, aufweist.

Ein Verfahren, das sowohl zum Herstellen von etwa zylindrischen Bechern als auch flachen rechteckigen Bechern verwendet wird, ist aus der Praxis bekannt. In der Fachsprache bezeichnet man dieses Verfahren als "Inmold-Labeling", weil die Hüllfolie nicht nur die Funktion der Becherwandung, sondern auch die eines Etiketts ausübt. Die Hüllfolie kann als Flachmaterial vor dem Einlegen in die Matrize bedruckt werden, wodurch sich die Druckqualität gegenüber nach ihrer Herstellung bedruckten Kunststoffbechern beträchtlich erhöhen läßt.

Es ist die Aufgabe der vorliegenden Erfindung, ein Spritzgußformwerkzeug der eingangs genannten Art zu verbessern.

Diese Aufgabe wird durch ein Spritzgußformwerkzeug gemäß Anspruch 1 gelöst.

In der Matrizenwandung kann zumindest eine verschließbare Vakuumöffnung vorgesehen sein, die mit einem Anschluß für eine Unterdruckquelle verbunden ist. Diese Unterdruckquelle kann mittels einer Steuerung und zugehörigen Ventilen so betrieben werden, daß die Vakuumöffnungen nur dann Luft ansaugen, wenn eine Hüllfolie in der Matrize liegt. Die Matrize ist im Bereich der Matrizenwandung, wie Boden oder Mantelfläche, quer zur Schließrichtung des Formwerkzeugs in zumindest zwei, bei geöffnetem Formwerkzeug begrenzt gegeneinander verschiebbaren Matrizenhälften geteilt, wodurch in der Matrizenwandung ein die Vakuumöffnung darstellender Ringspalt gebildet ist. Durch die Teilung der Matrize quer zur Schließrichtung des Formwerkzeugs kann die Schließbewegung des Formwerkzeugs zum Öffnen und Schließen der Vakuumöffnungen ausgenutzt werden, so daß die Vakuumöffnungen unmittelbar vor dem Einspritzen der Kunststoffschmelze verschlossen sind. In diesem Zustand ist die Patrize bereits nahezu vollständig in die Matrize eingefahren, so daß eine Verschiebung der Hüllfolie nicht mehr zu befürchten ist. Um die Vakuumöffnungen nach dem erfolgten Spritzgußzyklus wieder auf einfache Weise zu öffnen, sind zwischen den beiden Matrizenhälften Federelemente vorgesehen, die beim Öffnen des Formwerkzeugs die beiden Matrizenhälften selbsttätig bis zum Erreichen einer vorbestimmten Schalthöhe voneinander abheben. Beim Schließen des Formwerkzeuges werden diese Federelemente selbsttätig durch die Patrize zusammengedrückt, so daß für die Öffnungs- und Schließbewegung der Vakuumöffnungen kein eigener Antrieb erforderlich ist. Die Federelemente sind durch einen O-Ring gebildet, der die beiden Matrizenhälften zur Bildung eines mit dem Ringspalt und dem Unterdruckanschluß verbundenen Vakuumraums abdichtet. auf diese Weise läßt sich der bauliche Aufwand sehr gering halten.

Die Hüllfolie kann auf einem etwa der äußeren Gestalt des späteren Bechers entsprechenden Dorn in die Matrize eingelegt, durch Aufbringen eines Luftüberdrucks zwischen Dorn und Hüllfolie und dem Dorn abgeblasen und dabei gleichzeitig an die Matrizenwand angesaugt werden. Durch das Abblasen von dem Dorn wird die Hüllfolie bereits großflächig an die Matrizenwandung angelegt, so daß der Ansaugvorgang indirekt unterstützt wird.

Obgleich man auch größere Spaltweiten verwenden kann, ist es für eine Hüllfolie zum Etikettieren eines runden Bechers ausreichend, wenn die Spalthöhe des geöffneten Rings, wenn also das Vakuum angelegt ist. etwa 0,3 mm beträgt.

Bei einem für die Herstellung eines ausschließlich an der Mantelfläche dekorierten, d.h. mit einer Hüllfolie versehenen, im wesentlichen zylindrischen Bechers vorgesehenen Formwerkzeug ist es zudem günstig, wenn der Ringspalt in der Mantelfläche der Matrize umlaufend mit geringem Abstand vom Boden angeordnet ist. Dieser Ringspalt reicht auch bei hohen zylindrischen Bechern aus, da sich die Hüllfolie aufgrund der zylindrischen Wölbung der Matrize auch an dem der Patrize zugewandten Ende der Matrize glatt an die Wandung anlegt.

Bei einem Werkzeug, das für die Herstellung eines auch am Boden dekorierten Bechers vorgesehen ist, ist es hingegen günstig, wenn der Ringspalt durch zwei zueinander komplementäre ineinandergreifende kegel- oder pyramidenstumpfförmige Abschnitte der beiden Matrizenhälften gebildet ist. Der Ringspalt liegt bei einem solchen Formwerkzeug im Boden der Matrize. Wenn die beiden kegel- oder pyramidenstumpfförmigen Abschnitte so ineinandergefahren sind, daß der Ringspalt geschlossen ist, ist der Boden dann im wesentlichen glatt.

Besonders vorteilhaft ist es, wenn die der Patrize abgewandte Matrizenhälfte eine Angußdüse aufweist und im wesentlichen ortsfest angeordnet ist, während die der Patrize zugewandte Matrizenhälfte zur Bildung der Vakuumöffnungen bei geöffnetem Formwerkzeug abhebbar ist und bei geschlossenem Formwerkzeug durch die Patrize gegen die andere Matrizenhälfte gedrückt ist, um dabei den Ringspalt zu schließen.

Neben den dadurch erreichbaren Vorteilen der einfachen Öffnungs- und Schließbewegung des Ringspaltes in der Matrize läßt sich bei einem Formwerkzeug, bei dem der Ringspalt im Boden der Matrize vorgesehen ist, als weiterer Vorteil eine besondere Angußgestaltung des Werkzeuges vermeiden. Durch den im Boden der Matrize ausgebildeten Ringspalt wird nämlich die Hüllfolie glatt an den Boden angesaugt, so daß die eindringende Kunststoffschmelze von Anfang an in den Bereich zwischen Patrize und Hüllfolie gelangt.

Im folgenden wird die Erfindung anhand zweier Ausführungsbeispiele näher erläutert. Es zeigen:
- **Fig. 1**: einen Ausschnitt aus einem ersten Formwerkzeug zur Herstellung eines im wesentlichen zylindrischen Bechers in einem Längsschnitt, und
- **Fig. 2**: in einer ähnlichen Ansicht wie Fig. 1 ein Werkzeug zur Herstellung eines rechteckförmigen Bechers.

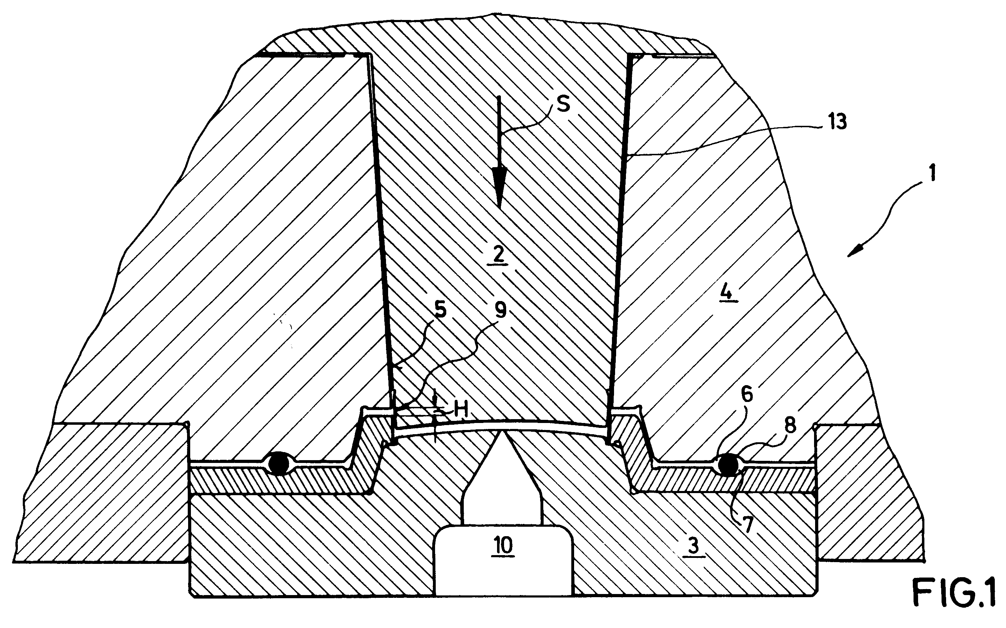

Fig. 1 zeigt ein Formwerkzeug, das im wesentlichen aus einer Matrize 1 und einer Patrize 2 besteht. Die Matrize 1 ist quer zur Schließrichtung S in zwei Hälften 3 und 4 unterteilt. Die Teilungsfuge liegt mit geringem Abstand oberhalb des Matrizenbodens. Zwischen den beiden Matrizenhälften 3 und 4 ist in einander gegenüberliegenden umlaufenden Nuten 6 und 7 ein O-Ring 8 eingelegt, dessen Funktion später noch erläutert wird. Der Raum, der von dem O-Ring 8, den beiden Matrizenhälften 3 und 4 und der Matrizenwandung eingeschlossen ist, ist an eine steuerbare Unterdruckquelle angeschlossen, die der Übersichtlichkeit halber in der Zeichnung nicht dargestellt ist. Die beiden Matrizenhälften 3 und 4 sind im geöffneten Zustand des Werkzeugs gegeneinander verschiebbar, so daß sie im Bereich der Matrizenwandung einen Ringspalt 9 bilden können, dessen maximale Spalthöhe H bei dem hier gezeigten Ausführungsbeispiel O,3 mm beträgt.

Es ist zu erkennen, daß in der Matrizenhälfte 3, die die Außenseite des späteren Becherbodens bildet, die Angußdüse 10 ausgebildet ist. Diese Matrizenhälfte 3 stützt sich an einer Werkzeugaufnahme der Maschine ab und ist somit im wesentlichen ortsfest angebracht, während die andere Matrizenhälfte 4, wie oben bereits erwähnt, gegenüber der Matrizenhälfte 3 in und entgegen der Schließrichtung S begrenzt verschieblich geführt ist.

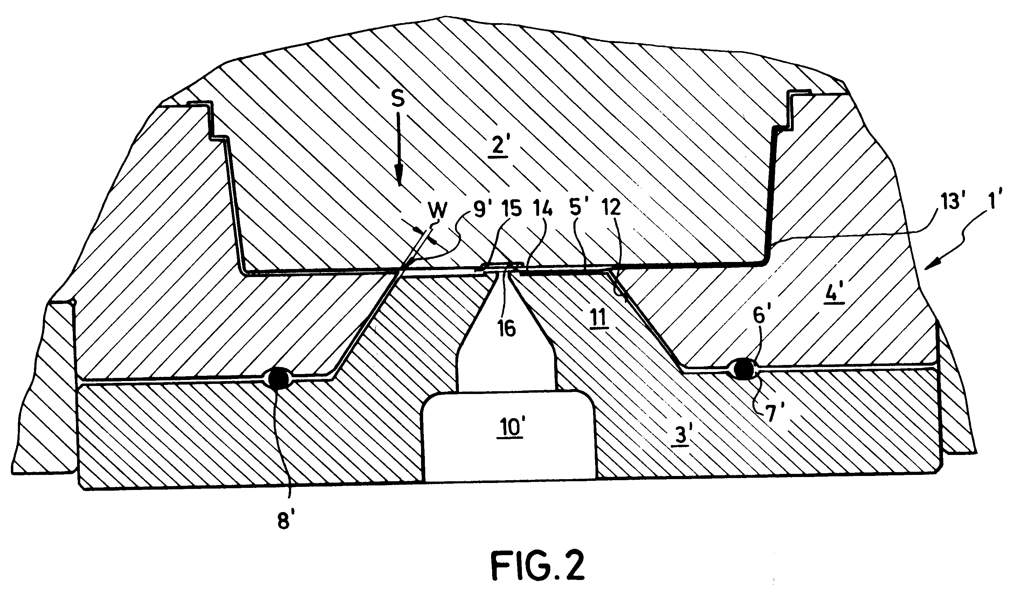

Der Aufbau des in Fig. 2 dargestellten Formwerkzeugs ist vom Prinzip her identisch mit dem Formwerkzeug gemäß Fig. 1. Es werden daher für gleiche und ähnliche Bauteile identische Bezugszeichen wie in Fig. 1 verwendet, die jedoch durch einen Strich indiziert sind.

Im Gegensatz zu dem zuvor beschriebenen Ausführungsbeispiel bildet die eine Matrizenhälfte 3' nur einen Teil, nämlich den mittleren Teil des späteren Becherbodens ab, während die andere Matrizenhälfte 4'sich bis in den Bodenbereich hinein erstreckt. Die Matrizenhälfte 3' weist einen pyramidenstumpfförmigen Abschnitt 11 auf, der in eine entsprechende Ausnehmung 12' der anderen Matrizenhälfte 4' hineinpaßt. Zwischen der Ausnehmung 12 und dem Abschnitt 11 wird wieder ein Ringspalt 9' gebildet, der in nicht dargestellter Weise mit einer Unterdruckquelle verbunden ist, wobei die beiden Matrizenhälften 3', 4' über den O-Ring 8' abgedichtet sind. Die Spaltweite W beträgt bei dem in Fig. 2 dargestellten Formwerkzeug mit geöffneten Matrizenhälften 3 und 4 ebenfalls 0,3 mm.

Im folgenden wird nun die Funktionsweise der zuvor beschriebenen Formwerkzeuge und ein Verfahren zum Herstellen eines Kunststoffbechers unter Verwendung dieser Formwerkzeuge beschrieben, wobei zunächst mit Fig. 1 begonnen wird.

Bei geöffnetem Formwerkzeug ist entgegen der Darstellung der Fig. 1 die Patrize 2 aus der Matrize 1 herausgefahren. In diesem Zustand wird eine Hüllfolie 13 mit einem Dorn, der in etwa das gleiche Aussehen wie die Patrize 2 hat, in das Formnest der Matrize 1 eingesetzt. Die Hüllfolie, die in diesem Zustand bereits zu einer Zylinderform gelegt ist, wird, sobald sie mit ihrem vorderen Ende gegen die den Boden bildende Matrizenhälfte 3 stößt, von dem Dorn abgeblasen, wobei gleichzeitig in dem Zwischenraum zwischen den beiden Matrizenhälften 3 und 4 ein Vakuum angelegt wird, so daß die Hüllfolie 13 über den Ringspalt 9 gegen die Matrizenwandung 5 fest angesaugt wird.

Dann fährt die Patrize 2 in das Formnest der Matrize 1 ein, bis die Patrize mit einer Schulter gegen den oberen Rand der Matrizenhälfte 4 stößt. Dieser Zustand ist in Fig. 1 dargestellt. Der Übersichtlichkeit halber ist die Hüllfolie 13 nur in der rechten Hälfte der Fig. 1 eingezeichnet.

Wird die Patrize 2 weiter in Schließrichtung bewegt, nimmt sie die Matrizenhälfte 4 mit, die dann gegen die durch den O-Ring 8 zwischen den beiden Matrizenhälften 3 und 4 ausgeübte Federwirkung in Anlage an die Matrizenhälfte 3 geschoben wird. Dabei schließt sich der Ringspalt 9. Zu diesem Zeitpunkt wird über die Angußdüse 10 die Kunststoffschmelze eingespritzt, die dann im Bodenbereich des Bechers radial nach außen und zwischen der Mantelfläche der Patrize 2 und der Hüllfolie 13 nach oben strömt. Nach Beendigung des Spritzvorganges wird die Patrize 2 aus der Matrize 1 herausgefahren, wonach der Becher entnommen werden kann. Beim Herausfahren der Patrize 2 aus der Matrize 1 öffnen sich die beiden Matrizenhälften 3 und 4 wieder bis zur vorgegebenen Spalthöhe H, wodurch das Entformen des Bechers auch erleichtert wird.

Die Verfahrensweise in bezug auf das Ausführungsbeispiel gemäß Fig. 2 ist prinzipiell die gleiche, wie anhand der Fig. 1 beschrieben. Im Gegensatz dazu wird jedoch eine Hüllfolie 13' verwendet, die auch den Boden des Bechers dekoriert. Die Hüllfolie 13', die in Fig. 2 auch nur in der rechten Hälfte dargestellt ist, weist im Bereich um die Angußdüse 10' eine Durchbrechung auf, so daß die Kunststoffschmelze zwischen Patrize 2' und Rückseite der Hüllfolie gelangen kann. Neben den oben bereits beschriebenen Vorteilen der Positionierung der Hüllfolie in der Matrize 1' durch Ansaugen entsteht als weiterer Vorteil, daß der Rand 14' der in der Hüllfolie 13' um die Angußdüse 10 herum vorgesehenen Öffnung durch das Vakuum an die Matrizenhälfte 3 angesaugt wird. Dadurch gelangt beim Spritzvorgang die Kunststoffschmelze automatisch zwischen Patrize 2' und Hüllfolie, so daß eine besondere Angußgestaltung im Werkzeug vermieden werden kann. Wenn überhaupt, kann man im Bereich des Bodens der Patrize 2' eine Ausnehmung 15' und um die Angußdüse 10' herum eine leichte, komplementäre Erhebung 16' vorsehen, deren Höhe der Folienstärke der Hüllfolie 13' entspricht. Die horizontale Ausdehnug der Erhebung 16' entspricht der durch den Rand 14' begrenzten Öffnung der Hüllfolie 13'.

## Patentansprüche

1. Spritzgußformwerkzeug, bestehend aus einer Matrize und einer Patrize, von denen eine im Bereich ihrer Wandung, wie Boden oder Mantelfläche, quer zur Schließrichtung des Formwerkzeugs in zumindest zwei bei geöffnetem Formwerkzeug begrenzt gegeneinander verschiebbare Hälften (3, 4, ; 3', 4') geteilt ist, wodurch in der Wandung (5, 5') ein Ringspalt gebildet ist, der mit einem Unterdruckanschluß verbunden ist, um eine in das Formwerkzeug eingelegte Hüllfolie anzusaugen, wobei zwischen den beiden Hälften (3, 4; 3', 4') Federelemente (8; 8') vorgesehen sind, die beim Öffnen des Formwerkzeuges die beiden Hälften (3, 4; 3', 4') selbsttätig bis zum Erreichen einer vorbestimmten Spalthöhe (H; W) voneinander abheben, **dadurch gekennzeichnet,** daß die Matrize (1) in die beiden Hälften (3, 4; 3', 4') unterteilt ist, und daß die Federelemente durch einen O-Ring (8; 8') gebildet sind, der die beiden Matrizenhälften (3, 4; 3', 4') zur Bildung eines mit dem Ringspalt (9; 9') und dem Unterdruckanschluß verbundenen Vakuumraumes abdichtet.

2. Formwerkzeug nach Anspruch 1, **dadurch gekennzeichnet**, daß die Spalthöhe (H; W) des geöffneten Ringspalts (9, 9') etwa 0,3 mm beträgt.

3. Formwerkzeug nach Anspruch 1 oder 2, **dadurch gekennzeichnet,** daß der Ringspalt (9) bei einem für die Herstellung eines ausschließlich an der Mantelfläche dekorierten, im wesentlichen zylindrischen Bechers vorgesehenen Formwerkzeug in der Mantelfläche der Matrize umlaufend mit geringem Abstand vom Boden angeordnet ist.

4. Formwerkzeug nach einem der Ansprüche 1 bis 3, **dadurch gekennzeichnet**, daß der Ringspalt (9') bei einem für die Herstellung eines auch am Boden dekorierten Bechers vorgesehenen Formwerkzeug im Boden der Matrize (1') vorgesehen ist, wobei der Ringspalt (9') durch zwei zueinander komplementäre, ineinandergreifende kegel- oder pyramidenstumpfförmige Abschnitte (11, 12) der beiden Matrizenhälften (3', 4') gebildet ist.

5. Formwerkzeug nach einem der Ansprüche 1 bis 4, **dadurch gekennzeichnet**, daß die der Patrize (2; 2') abgewandte Matrizenhälfte (3; 3') eine Angußdüse (10; 10') aufweist und im wesentlichen ortsfest angeordnet ist, während die der Patrize (2; 2') zugewandte Matrizenhälfte (4) zur Bildung der Vakuumöffnungen (9; 9') bei geöffnetem Formwerkzeug abhebbar ist und bei geschlossenem Formwerkzeug durch die Patrize (2; 2') gegen die andere Matrizenhälfte (3; 3') gedrückt ist, um dabei den Ringspalt (9; 9') zu schließen.

## Claims

1. Injection mould, comprising a cavity plate and a core plate, one of which, in the region of its wall, such as the base or the peripheral surface, is divided transversely to the closure direction of the mould into at least two halves (3, 4; 3', 4'), which, when the mould is open, can be displaced with respect to one another to a limited extent, thus forming an annular gap in the wall (5, 5'), which gap is in communication with a vacuum connection, in order to suck on a coating film which has been placed in the mould, spring elements (8; 8') being provided between the two halves (3, 4; 3', 4'), which spring elements, when the mould is opened, automatically lift the two halves (3, 4; 3', 4') off one another until a predetermined gap height (H; W) is reached, characterized in that the cavity plate (1) is divided into the two halves (3, 4; 3', 4'), and in that the spring elements are formed by an O-ring (8; 8'), which seals the two cavity-plate halves (3, 4; 3', 4') to form a vacuum chamber which is in communication with the annular gap (9; 9') and the vacuum connection.

2. Mould according to Claim 1, characterized in that the gap height (H; W) of the open annular gap (9, 9') is approximately 0.3 mm.

3. Mould according to Claim 1 or 2, characterized in that the annular gap (9), in the case of a mould which is provided for the production of an essentially cylindrical container which is decorated exclusively on the peripheral surface, is arranged in such a manner that it runs around the peripheral surface of the cavity plate, at a short distance from the base.

4. Mould according to one of Claims 1 to 3, characterized in that the annular gap (9'), in the case of a mould which is provided for the production of a container which is also decorated on the bottom, is provided in the bottom of the cavity plate (1'), the annular gap (9') being formed by two mutually complementary sections (11, 12) of the two cavity-plate halves (3', 4'), which sections fit into one another and are in the form of truncated cones or truncated pyramids.

5. Mould according to one of Claims 1 to 4, characterized in that the cavity-plate half (3; 3') which is remote from the core plate (2; 2') has a gate (10; 10') and is arranged in an essentially fixed location, while the cavity-plate half (4) which is in proximity to the core plate (2; 2') can be lifted off when the mould is open to form the vacuum openings (9; 9') and when the mould is closed is pressed against the other cavity-plate half (3; 3') by the core plate (2; 2') in order thus to close the annular gap (9; 9').

## Revendications

1. Outil de moulage par injection constitué d'une matrice et d'un poinçon, dont l'un est divisé dans la région de leur paroi, tel que dans le fond ou dans la paroi latérale, transversalement par rapport à la direction de fermeture de l'outil de moulage, en au moins deux moitiés (3, 4 ; 3', 4') pouvant être déplacées l'une par rapport à l'autre de façon limitée, lorsque l'outil de moulage est ouvert, disposition par laquelle est formé un passage annulaire dans la paroi (5, 5') qui est relié à une source de vide partiel pour aspirer un film d'enveloppe inséré dans l'outil de moulage, des éléments de ressort (8 ; 8') étant prévus entre les deux moitiés (3, 4 ; 3', 4') qui détachent les deux moitiés (3, 4 ; 3', 4') lors de l'ouverture de l'outil de moulage automatiquement jusqu'à une largeur de fente prédéterminée (H ; W) caractérisé en ce que la matrice (1) est subdivisée en deux parties (3, 4 ; 3', 4') et en ce que les éléments de ressort sont formés par un anneau torique (8 ; 8') qui colmate les deux moitiés de matrice (3, 4 ; 3', 4') pour former une cavité mise sous vide, reliée au passage annulaire (9 ; 9') et à la source de mise sous vide partiel.

2. Outil de moulage selon la revendication 1, caractérisé en ce que la largeur de fente (H ; W) du passage annulaire (9, 9') ouvert vaut environ 0,3 mm.

3. Outil de moulage selon la revendication 1 ou 2, caractérisé en ce que le passage annulaire (9) est disposé dans la paroi latérale de la matrice sur toute la périphérie à une faible distance du fond, dans le cas d'un outil de moulage prévu pour la fabrication d'un gobelet essentiellement cylindrique, décoré exclusivement sur la surface latérale.

4. Outil de moulage selon l'une des revendications 1 à 3, caractérisé en ce que le passage annulaire (9') est prévu dans le fond de la matrice (1'), dans le cas d'un outil de moulage prévu pour la fabrication d'un gobelet également décoré dans le fond, le passage annulaire (9') étant formé par deux sections (11, 12) de forme de tronc de cône ou de tronc de pyramide, emboîtables et complémentaires des deux moitiés de matrice (3', 4').

5. Outil de moulage selon l'une des revendications 1 à 4, caractérisé en ce que la moitié de matrice (3 ; 3') opposée au poinçon (2 ; 2') présente une buse d'injection (10, 10') et est disposée de manière essentiellement fixe, alors que la moitié de matrice (4) du côté poinçon (2, 2') peut être soulevée pour former les ouvertures de mise sous vide (9 ; 9'), lorsque l'outil de moulage est ouvert et qu'elle est pressée contre l'autre moitié de matrice (3 ; 3') par le poinçon (2 ; 2'), lorsque l'outil de moulage est fermé, de manière à fermer le passage annulaire (9, 9').
